# EUROPÄISCHE PATENTANMELDUNG

(11) **EP 4 625 016 A1**
(43) Veröffentlichungstag der Anmeldung: **01.10.2025**
(21) Anmeldenummer: 24166776.5
(22) Anmeldetag: 27.03.2024
(51) Int. Cl.: G02B 6/44, B65H 75/36, G02B 6/50

(54) **ANSCHLUSSEINHEIT FÜR LICHTWELLENLEITER ZUR VERWENDUNG BEIM NACHTRÄGLICHEN ANSCHLUSS VON HAUSHALTEN AN DAS GLASFASERNETZ**

(71) Anmelder: Glasfaser Connect BH d.o.o., 71210 Ilidza - Sarajevo (BA)
(72) Erfinder: Brcvak, Hajriz, 48612 Horstmar (DE); Becirovic, Edvin, 48612 Horstmar (DE)
(74) Vertreter: Pelster Behrends Patentanwälte PartG mbB

(57) **Zusammenfassung**

Die Erfindung betrifft eine Anschlusseinheit (10) für Lichtwellenleiter zur Verwendung beim nachträglichen Anschluss einer Anschlussstelle (12) an ein Glasfasernetz (14), umfassend i) einen Grundkörper (16) mit einem Aufnahmeinnenraum zur Aufnahme einer Vielzahl von Wicklungen eines Führungsrohres (18), wobei der Aufnahmeinnenraum eine sich in einer axialen Richtung in den Aufnahmeinnenraum hinein erstreckende zentrale Aufwickelerhebung (20) aufweist, wobei der Aufnahmeinnenraum über eine Einführungsöffnung (22) und eine von der Einführungsöffnung (22) verschiedene Ausgabeöffnung (24) des Grundkörpers (16) zugänglich ist, wobei die Ausgabeöffnung (24) in axialer Richtung (R_{A}) von der zentralen Aufwickelerhebung (20) beabstandet ist, und ii) ein in zwei oder mehr Wicklungen um die Aufwickelerhebung (20) herum aufgewickeltes Führungsrohr (18) mit einem ersten Endabschnitt (26) und einem zweiten Endabschnitt (28), wobei der erste Endabschnitt (26) des Führungsrohres (18) in axialer Richtung (R_{A}) aus der Ausgabeöffnung (24) des Grundkörpers (16) herausragt, wobei der zweite Endabschnitt (28) des Führungsrohres (18) in die Einführungsöffnung (22) des Grundkörpers (16) hineinragt, wobei die Anschlusseinheit (10) dazu eingerichtet ist, dass das Führungsohr (18) in Folge einer am ersten Endabschnitt (26) angreifenden und in axialer Richtung (R_{A}) wirkenden Zugkraft unter Abwicklung der Wicklungen aus dem Grundkörper (16) herausgezogen werden kann.

## Beschreibung

Die Erfindung betrifft eine Anschlusseinheit für Lichtwellenleiter zur Verwendung beim nachträglichen Anschluss einer Anschlussstelle an ein Glasfasernetz, ein Verfahren zum Verlegen eines Glasfasernetzes unter Einsatz einer entsprechenden Anschlusseinheit sowie ein darauf aufbauendes Verfahren zum nachträglichen Anschluss einer nachträglich anzuschließenden Anschlussstelle an ein Glasfasernetz. Offenbart wird zudem die Verwendung einer entsprechenden Anschlusseinheit zur Erleichterung des nachträglichen Anschlusses von Anschlussstellen.

Im Zuge der fortschreitenden technologischen Entwicklung sind im Bereich der Informations- und Kommunikationstechnik in den letzten Jahren, insbesondere bei der Weiterentwicklung von Komponenten von Kommunikationsnetzen, bedeutende Fortschritte erzielt worden. Kommunikationsnetze wurden in vielen Bereichen stark weiterentwickelt, um dem zunehmenden Bedürfnis nach einer Übertragung großer Datenmengen in möglichst kurzer Zeit, das heißt hoher Bandbreiten, über weite Distanzen Genüge zu tun. Die Verwendung von Lichtwellenleitern als Übertragungsmedium ermöglicht in diesem Bereich heutzutage, insbesondere im Vergleich zu Kupferkabeln, hohen Datenraten bei gleichzeitig großen überbrückbaren Entfernungen. Daher ist es zunehmend ein Bedürfnis, die zurzeit noch in vielen Teilen bestehenden Kupferkabel durch moderne Glasfaserkabel zu ersetzen.

Hierfür sind allerdings in der Regel Bauarbeiten auf öffentlichem sowie privatem Grund erforderlich, wobei entsprechende Bauarbeiten, insbesondere das Aufreißen öffentlicher Straßen zum Verlegen des Glasfasernetzes, den Alltag von Anwohnern erheblich beeinträchtigen können, was häufig als nachteilig empfunden wird. Zudem sind diese Arbeiten häufig mit einem administrativ aufwendigen Genehmigungsprozess verbunden.

Überdies ist die Verlegung eines Glasfasernetzes planungstechnisch anspruchsvoll, da die Verlegung häufig eine Vielzahl verschiedener technischer Arbeiten erfordert, welche zumeist zudem durch unterschiedliche Betriebe zu verschiedenen Zeitpunkten ausgeführt werden müssen. Das Einblasen und Spleißen einer Glasfaser zu einer Anschlussstelle hin erfolgt nämlich häufig zeitlich erst nach dem Vergraben von für die Aufnahme von Glasfasern geeigneten Führungsrohren im Boden und erfordert dabei regelmäßig den Einsatz von Spezialwerkzeug, beispielsweise Einblasgeräten. Beim Vergraben der Führungsrohre kann es allerdings zu Beschädigungen des Führungsrohres kommen, welche ein erfolgreiches Einblasen der Glasfaser verhindern und in einem erneuten Aufreißen des Bodens zum Beheben der Beschädigung resultieren können. Dieser ressourcenintensive Vorgang wird häufig als verbesserungsbedürftig empfunden, insbesondere mit Blick auf die hierfür erforderliche Arbeitskraft, die hierfür aufgewendeten Materialien und insbesondere auch den Zeitaufwand. Das wiederholte Aufreißen von Straßen auf öffentlichem Grund -nebst der Einholung der dafür benötigten Erlaubnis- sowie das erneute Bereitstellen der Spezialwerkzeuge zum Beheben der Beschädigung bzw. zum erneuten Einblasen der Glasfaser sollte bevorzugt vermieden werden.

Überdies werden bei der Verlegung eines Glasfasernetzes heutzutage oftmals lediglich die Anschlussstellen angeschlossen, welche bereits vor der Bauphase des Glasfasernetzes, das heißt insbesondere vor der Verlegung der Führungsrohre im Boden, einen entsprechenden Anschluss gewünscht hatten. Dies bedeutet in anderen Worten, dass häufig ein Teil der potenziellen Anschlussstellen während der Verlegephase des Glasfasernetzes nicht an das Glasfasernetz angeschlossen wird. Diese nicht angeschlossenen Anschlussstellen werden zuweilen auch als "homes passed" bezeichnet.

Wenn, beispielsweise in Folge eines Eigentümerwechsels, nach dem Verlegen des Glasfasernetzes ein nachträglicher Anschluss eines solchen "home passed" an das Glasfasernetz gewünscht wird, ist nach heutigem Stand der Technik häufig eine Wiederholung der vorstehend erläuterten Bauarbeiten unumgänglich. Das bedeutet, dass neben einem erneuten Aufreißen der Straße zum Verlegen von Führungsrohren von der Anschlussstelle zum Straßennetz hin und dem Beantragen einer entsprechenden Genehmigung, außerdem in den meisten Fällen wiederum das Einblasen bzw. Spleißen der Glasfaser erforderlich ist. Der nachträgliche Anschluss von Anschlussstellen an das Glasfasernetz wird daher häufig als besonders kosten- und ressourcenintensiv empfunden. Dies wird insbesondere dann als besonders ärgerlich angesehen, wenn ein Nachanschluss eines "home passed" bereits zeitnah nach der Bauphase des Glasfasernetzes erfolgt. Dies kann auch zu einer ungewollten Abwehrhaltung gegenüber dem Ausbau des Glasfasernetzes führen, da ein Gefühl von Planlosigkeit entstehen kann, wenn eine Straße auf öffentlichem Grund innerhalb eines kurzen Zeitraums, beispielsweise innerhalb eines Jahres, mehrfach aufgerissen werden muss.

Die primäre Aufgabe der vorliegenden Erfindung war es, die Nachteile des Standes der Technik auszuräumen oder zumindest zu verringern.

Insbesondere war es die Aufgabe der vorliegenden Erfindung, Verfahren und Vorrichtungen zur Verwendung beim nachträglichen Anschluss einer Anschlussstelle an ein Glasfasernetz anzugeben, durch deren Einsatz nachträgliche Bauarbeiten auf öffentlichem Grund vermieden werden können sollten. Hierbei war es eine wünschenswerte Vorgabe, dass die für den nachträglichen Anschluss notwendigen Arbeitsschritte durch den Einsatz der anzugebenden Vorrichtungen und Verfahren im Vergleich zum Stand der Technik verringert werden können sollten.

Es war zudem eine Aufgabe der vorliegenden Erfindung, dass die anzugebenden Vorrichtungen besonders robust ausführbar sein sollte, sodass sie auch über einen längeren Zeitraum nutzbar sein und auch einen zeitlich stark verzögerten Nachanschluss erlauben sollte.

Es war außerdem eine Aufgabe der vorliegenden Erfindung, dass die anzugebenden Vorrichtungen und Verfahren eine besonders einfache Nutzung ermöglichen sollte, die insbesondere keine hohen Anforderungen an den Ausbildungsgrad der eingesetzten Arbeitskräfte stellen sollte.

Es war auch eine Aufgabe der vorliegenden Erfindung, dass die anzugebende Vorrichtung besonders zeit- und kosteneffizient herstellbar sein sollte.

Es war zudem eine Aufgabe der vorliegenden Erfindung, ein Verfahren zum Verlegen eines Glasfasernetzes unter Einsatz der anzugebenden Vorrichtung sowie ein hierauf aufbauendes Verfahren zum nachträglichen Anschluss einer nachträglich anzuschließenden Anschlussstelle an ein Glasfasernetz bereitzustellen.

Es war eine sekundäre Aufgabe der vorliegenden Erfindung, eine Verwendung der anzugebenden Vorrichtung bei der Verlegung eines Glasfasernetzes zur Erleichterung des nachträglichen Anschlusses einer nachträglich anzuschließenden Anschlussstelle an das Glasfasernetz anzugeben.

Die Erfinder haben nunmehr gefunden, dass sich die vorstehend beschriebenen Aufgaben lösen lassen, wenn eine Anschlusseinheit für Lichtwellenleiter zur Verwendung beim nachträglichen Anschluss einer Anschlussstelle an ein Glasfasernetz bereitgestellt wird, welche im Nahbereich von "homes passed" vergraben werden kann, und in der ein voraufgewickeltes Führungsrohr derart um eine sich in axialer Richtung erstreckende Aufwickelerhebung herumgewickelt ist, dass das Führungsohr in Folge einer in axialer Richtung wirkenden Zugkraft unter Abwicklung der Wicklungen aus dem Grundkörper herausgezogen werden kann, wie es in den Ansprüchen definiert ist, so dass die vergrabene Anschlusseinheit besonders effizient als Reservoir für das Führungsroh fungieren kann, welches besonders leicht und zuverlässig aus der Anschlusseinheit herausgezogen und zur nachträglich anzuschließenden Anschlussstelle gezogen werden kann. Hierdurch wird in vorteilhafter Weise ein erneuter Aufriss im öffentlichen Bereich vermieden und in einfacher Weise die Zahl der notwendigen Arbeitsschritte, insbesondere beim Einblasen, und die Zahl der notwendigen Spleiß-Schritte minimiert.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Verfahren und Verwendungen ergeben sich aus den Merkmalen bevorzugter Anschlusseinheiten.

Insbesondere bevorzugte Ausführungsformen der Erfindung sind in den Ausführungsbeispielen offenbart. Besonders bevorzugte Ausführungsformen der Erfindung sind an diese Ausführungsbeispiele angelehnt und weisen entsprechend zwei oder mehr, bevorzugt drei oder mehr, ganz besonders bevorzugt vier oder mehr, der nachfolgend offenbarten bevorzugten Merkmale der Erfindung auf, welche auch in den Ausführungsbeispielen realisiert sind.

Die Erfindung betrifft insbesondere eine Anschlusseinheit für Lichtwellenleiter zur Verwendung beim nachträglichen Anschluss einer Anschlussstelle an ein Glasfasernetz, umfassend
i) einen Grundkörper mit einem Aufnahmeinnenraum zur Aufnahme einer Vielzahl von Wicklungen eines Führungsrohres, wobei der Aufnahmeinnenraum eine sich in einer axialen Richtung in den Aufnahmeinnenraum hinein erstreckende zentrale Aufwickelerhebung aufweist,
   wobei der Aufnahmeinnenraum über eine Einführungsöffnung und eine von der Einführungsöffnung verschiedene Ausgabeöffnung des Grundkörpers zugänglich ist, wobei die Ausgabeöffnung in axialer Richtung von der zentralen Aufwickelerhebung beabstandet ist, und
ii) ein in zwei oder mehr Wicklungen um die Aufwickelerhebung herum aufgewickeltes Führungsrohr mit einem ersten Endabschnitt und einem zweiten Endabschnitt,

wobei der erste Endabschnitt des Führungsrohres in axialer Richtung aus der Ausgabeöffnung des Grundkörpers herausragt, wobei der zweite Endabschnitt des Führungsrohres in die Einführungsöffnung des Grundkörpers hineinragt,
wobei die Anschlusseinheit dazu eingerichtet ist, dass das Führungsohr in Folge einer am ersten Endabschnitt angreifenden und in axialer Richtung wirkenden Zugkraft unter Abwicklung der Wicklungen aus dem Grundkörper herausgezogen werden kann.

Die erfindungsgemäße Anschlusseinheit für Lichtwellenleiter ist insbesondere für die Verwendung beim nachträglichen Anschluss einer Anschlussstelle an ein Glasfasernetz vorgesehen.

Die Erfinder schlagen hierfür vor, die erfindungsgemäße Anschlusseinheit bereits während der Bauphase des Glasfasernetzes vor jeder potenziellen Anschlussstelle im Boden zu vergraben, und den ersten Endabschnitt des Führungsrohres auf den zur Anschlussstelle zugehörigen Privatgrund, bzw. so unmittelbar an dessen Grenze, dass er ohne Erdarbeiten im öffentlichen Raum vom Privatgrund zugänglich ist, zu ziehen und eine Glasfaser, die beispielsweise auch mehrere Lichtwellenleiter umfassen kann, in das Führungsrohr einzublasen. Durch das Verbinden, insbesondere Verspleißen, der im Führungsrohr der Anschlusseinheit geführten Lichtwellenleiter mit dem Glasfasernetz bereits in der Bauphase können hierdurch bei einem nachträglichen Anschluss der potenziellen Anschlussstelle vorteilhafterweise mehrere Arbeitsschritte entfallen.

Der nachträgliche Anschluss der Anschlussstelle kann nämlich kostengünstig und effizient erfolgen, indem der erste Endabschnitt auf dem Privatgrund lokalisiert, das Führungsrohr aus dem Grundkörper herausgezogen und im Anschluss bis zur Anschlussstelle gelegt wird. Dies erfolgt nach Einschätzung der Erfinder mit der erfindungsgemäßen Anschlusseinheit besonders einfach, zuverlässig und beschädigungsfrei durch Ziehen des ersten Endabschnittes in axialer Richtung unter verhedderfreier Abwicklung der um die Aufwickelerhebung gewickelten Wicklungen.

Durch den Einsatz der erfindungsgemäßen Anschlusseinheit bereits in der Bauphase eines Glasfasernetzes können somit erneute Bauarbeiten auf öffentlichem Grund, hierfür erforderliche Genehmigungen und das erneute Einblasen von Glasfasern bei einem nachträglichen Anschluss vermieden werden.

Die erfindungsgemäße Anschlusseinheit umfasst einen Grundkörper sowie ein um die Aufwickelerhebung des Grundkörpers herum aufgewickeltes Führungsrohr, dessen Endabschnitte aus der Einführungsöffnung und der Ausführungsöffnung des Grundkörpers herausragen. Die Aufwickelerhebung erstreckt sich in einer axialen Richtung im Aufnahmeinnenraum des Grundkörpers. Im Rahmen der vorliegenden Erfindung wird die axiale Richtung als Bezugsrichtung verwendet, um die räumlichen Relationen zwischen dem Führungsrohr und dem Grundkörper sowie die geometrische Form des Grundkörpers zu erläutern. Die axiale Richtung wird dabei in den meisten Fällen im Wesentlichen der Richtung entsprechen, in der das Führungsrohr aus der Ausgabeöffnung herausgezogen werden soll.

Der Grundkörper ist dazu eingerichtet, eine Vielzahl von Wicklungen des Führungsrohres aufzunehmen. Zur Herstellung der erfindungsgemäßen Anschlusseinheit wird das Führungsrohr in den meisten Fällen derart in die den Grundkörper eingeführt, dass zwei oder mehr Wicklungen, vorzugsweise eine Vielzahl von Wicklungen, um die Aufwickelerhebung herum aufgewickelt werden. Hierfür erachten es die Erfinder als bevorzugt, wenn der Grundkörper aus mehreren Gehäuseelementen gebildet wird. Zum Einführen des Führungsrohres in den Grundkörper kann dieser dann geöffnet werden, sodass das Aufwickeln des Führungsrohres um die Aufwickelerhebung herum vereinfacht wird. Bevorzugt ist also eine erfindungsgemäße Anschlusseinheit, wobei der Grundkörper aus zwei oder mehr, bevorzugt genau zwei, Gehäuseelementen gebildet wird, und/oder wobei der Grundkörper ein Aufnahmeelement und ein Deckelelement umfasst. Bevorzugt ist insoweit eine erfindungsgemäße Anschlusseinheit, wobei zumindest zwei der Gehäuseelemente, bevorzugt das Aufnahmeelement und das Deckelelement, besonders bevorzugt sämtliche Gehäuseelemente, über einen Schnellverschluss, bevorzugt einen Schraubverschluss oder einen Klickverschluss, besonders bevorzugt einen Klickverschluss mit zwei oder mehr Verschlusselementen, reversibel und zerstörungsfrei lösbar miteinander verbunden sind. Bevorzugt ist zusätzlich oder alternativ eine erfindungsgemäße Anschlusseinheit, wobei zwischen zumindest zwei der Gehäuseelemente, bevorzugt zwischen dem Aufnahmeelement und dem Deckelelement, ein Dichtungselement angeordnet ist. Durch das Vorsehen von genau zwei mittels eines Klickverschlusses miteinander verbundener Gehäuseelemente wird ein Aufwickeln des Führungsrohres um die Aufwickelerhebung des Grundkörpers im Rahmen des Herstellungsprozesses der erfindungsgemäßen Anschlusseinheit erheblich erleichtert, sodass der Herstellungsprozess besonders zeit- und kosteneffizient erfolgen kann. Zudem sind mehrteilige Anschlusseinheiten leichter zu fertigen, beispielsweise mittels Spritzguss.

Die Erfinder haben besonders geeignete Dimensionen für den Grundkörper identifiziert, welche die Aufnahme eines Führungsrohren in ausreichender Länge erlauben und gleichzeitig den übermäßigen Gebrauch von Material vermeiden sowie eine gute Handhabbarkeit zu gewährleisten. Bevorzugt ist nämlich eine erfindungsgemäße Anschlusseinheit, wobei der Grundkörper in axialer Richtung eine Höhe im Bereich von 50 bis 500 mm, bevorzugt im Bereich von 70 bis 300 mm, besonders bevorzugt im Bereich von 100 bis 150 mm, aufweist, und/oder wobei der Grundkörper orthogonal zur axialen Richtung eine maximale Breite im Bereich von 100 bis 1000 mm, bevorzugt im Bereich von 150 bis 700 mm, besonders bevorzugt im Bereich von 200 bis 500 mm, ganz besonders bevorzugt im Bereich von 300 bis 400 mm, aufweist.

Bevorzugt ist eine erfindungsgemäße Anschlusseinheit, wobei der Grundkörper zu 85 % oder mehr, bevorzugt zu 90 % oder mehr, besonders bevorzugt zu 98 % oder mehr, ganz besonders bevorzugt im Wesentlichen vollständig, aus einem thermoplastischen Kunststoff besteht, bezogen auf die Masse des Grundkörpers, und/oder wobei der Grundkörper einen glasfaserverstärkten Kunststoff umfasst, wobei der Grundkörper bevorzugt einen Massenanteil der Glasfaser im Bereich von 5 bis 20 %, bevorzugt im Bereich von 10 bis 15 %, aufweist. Bevorzugt ist zusätzlich oder alternativ eine erfindungsgemäße Anschlusseinheit, wobei der thermoplastische Kunststoff ausgewählt ist aus der Gruppe bestehend aus Polyestern und Polyolefinen, bevorzugt ausgewählt ist aus der Gruppe bestehend aus Polyolefinen, besonders bevorzugt ausgewählt ist aus der Gruppe bestehend aus Polyethylen und Polypropylen, ganz besonders bevorzugt ausgewählt ist aus der Gruppe bestehend aus High Density Polyethylen. Hieraus können vorteilhafterweise besonders robuste und langlebige Konstruktionen für den Grundkörper erhalten werden, welche insbesondere auch beim Eingraben in den Boden eine hohe Wasserbeständigkeit aufweisen und entsprechend für die langfristige Aufnahme eines von der erfindungsgemäßen Anschlusseinheit umfassten Führungsrohres besonders geeignet sind. Vorteilhafterweise ist eine oftmals mit hohen Produktionskosten verbundene Wasserdichtigkeit des Grundkörpers dabei in den meisten Fällen nicht notwendig, da das Führungsrohr, welches für die Aufnahme eines Lichtwellenleiters geeignet und bestimmt ist, ohnehin häufig wasserdicht ausgeführt sein wird.

Bevorzugt ist zusätzlich oder alternativ auch eine erfindungsgemäße Anschlusseinheit, wobei der Grundkörper spritzgegossen ist.

Es ist als Vorteil der vorliegenden Erfindung zu sehen, dass die geometrische Form des Grundkörpers eine einfache Auf- bzw. Abwicklung des Führungsrohres um die Aufwickelerhebung des Grundkörpers befördert bzw. bewirkt, sodass das Führungsrohr ohne festzuhängen abgewickelt werden kann, wodurch potenziell kritische Beschädigungen vermieden werden können. Ein Steckenbleiben bzw. Festhängen des Führungsrohres, insbesondere beim Herausziehen des ersten Endabschnittes des Führungsrohres aus dem Grundkörper, ist nämlich vorliegend gerade nicht gewünscht. Dies kann in effizienter Weise durch die strukturelle Ausgestaltung der Ausgabeöffnung weiter unterstützt werden. Bevorzugt ist nämlich eine erfindungsgemäße Anschlusseinheit, wobei der Grundkörper in axialer Richtung oberhalb der Aufwickelerhebung, bevorzugt als Teil des Deckelelements, einen Führungsabschnitt zur Führung des Führungsrohres umfasst, wobei die Ausgabeöffnung im Führungsabschnitt angeordnet ist, und/oder wobei sich der Grundkörper in axialer Richtung oberhalb der Aufwickelerhebung, bevorzugt im Bereich des Deckelelements, verjüngt, bevorzugt trichterartig verjüngt, wobei die Ausgabeöffnung am Ende der Verjüngung angeordnet ist. Nach Einschätzung der Erfinder begünstigt die Trichterform des Grundkörpers mit der an der Spitze des Trichters angeordneten Ausgabeöffnung oberhalb der Aufwickelerhebung ein verhakungsfreies Abwickeln des Führungsrohres.

Hinsichtlich der Grundform erachten die Erfinder vor allem einen im Wesentlichen runden Aufbau als bevorzugt, wodurch die Wicklungen besonders platzsparend aufgenommen werden können. Bevorzugt ist folglich eine erfindungsgemäße Anschlusseinheit, wobei die Außenkontur des Grundkörpers in axialer Richtung in einem ersten Abschnitt zylinderartig verläuft, und/oder wobei der Grundkörper zumindest abschnittsweise in einer orthogonal zur axialen Richtung stehenden Wickelebene einen kreisförmigen Querschnitt aufweist. Vorteilhafterweise ist nach Einschätzung der Erfinder eine derartige Außenkontur für den Grundkörper auch besonders robust gegen Beschädigungen, insbesondere auch beim Eingraben der erfindungsgemäßen Anschlusseinheit im Boden.

Wie vorstehend erläutert, ist es insbesondere auch eine Aufgabe der vorliegenden Erfindung, das Abwickeln der Wicklungen des Führungsrohres aus dem Grundkörper heraus ohne Verhaken des Führungsrohres zu ermöglichen. Die Erfinder haben erkannt, dass dies begünstigt werden kann, indem die Außenkonturen der Aufwickelerhebung und des Grundkörpers miteinander korrelieren, um einen Abwickelpfad für das Führungsrohr zu bilden, und eine zu freie Bewegung im Inneren zu verhindern. Bevorzugt ist also eine erfindungsgemäße Anschlusseinheit, wobei die Außenkontur des Grundkörpers und die Außenkontur der Aufwickelerhebung in der orthogonal zur axialen Richtung stehenden Ebene miteinander korrelieren, beispielsweise weil sich beide mit einer ähnlichen Steigung verjüngen.

Durch die geometrische Form des Grundkörpers und die geometrische Form der Aufwickelerhebung, kann das verhedderfreie Abwickeln der Wicklungen des Führungsrohres von der Aufwickelerhebung begünstigt werden. Bevorzugt ist zusätzlich oder alternativ eine erfindungsgemäße Anschlusseinheit, wobei zwischen der in axialer Richtung weisenden Oberfläche der Aufwickelerhebung und dem Grundkörper ein Abwickelspalt gebildet wird, wobei der Abwickelspalt bevorzugt eine Höhe im Bereich von 1*D bis 5*D, bevorzugt im Bereich von 1,1*D bis 4*D, besonders bevorzugt im Bereich von 1,2*D bis 3*D, ganz besonders bevorzugt im Bereich von 1,3*D bis 2*D, aufweist, wobei D der Durchmesser des Führungsrohres ist.

Die der Aufwickelerhebung gegenüberliegende Fläche des Grundkörpers bildet somit mit der Aufwickelerhebung zusammen den Abwickelspalt, welcher eine besonders stabile Abwicklung befördert. Beim Abwicklen drückt der Teil der Wicklung, der gerade abgewickelt wird, gegen den Abführabschnitt der Aufwickelerhebung aber auch gegen den zum Abwickelspalt gehörigen Teil des Grundkörpers, wodurch eine vorteilhafte Stabilisierung erreicht wird.

Bevorzugt ist grundsätzlich eine erfindungsgemäße Anschlusseinheit, wobei sich die Aufwickelerhebung in axialer Richtung verjüngt, bevorzugt komplementär zum Grundkörper. Bevorzugt ist zusätzlich oder alternativ zudem eine erfindungsgemäße Anschlusseinheit, wobei die Aufwickelerhebung in einer Wickelebene orthogonal zur axialen Richtung einen kreisförmigen Querschnitt oder einen ovalen Querschnitt, bevorzugt einen kreisförmigen Querschnitt, aufweist.

Die Aufwickelerhebung erfüllt eine weitere wichtige Aufgabe, nämlich die Stabilisierung der zwei oder mehr Windungen des Führungsrohres, wodurch Schäden durch mechanische Belastung des Führungsrohres oder der darin vorliegenden Lichtwellenleiter beim Transport und/oder beim Einbau reduziert werden können. Bevorzugt ist für eine sichere Verwahrung bei gleichzeitig guter Abwickelbarkeit eine erfindungsgemäße Anschlusseinheit, wobei die Aufwickelerhebung in axialer Richtung aneinander angrenzend einen Verwahrungsabschnitt und einen davon verschiedenen Abführabschnitt umfasst. Im Verwahrungsabschnitt der Aufwickelerhebung werden die Wicklungen des Führungsrohres durch die steile Aufwickelerhebung sicher stabilisiert. Der Abführabschnitt dient der erleichterten Abwicklung der Wickelungen, wobei vorteilhafterweise der Abführabschnitt und der in axialer Richtung vom Abführabschnitt beabstandete Teil des Grundkörpers derart zusammenwirken, dass ein Verheddern des Führungsrohres bzw. der Wicklungen des Führungsrohres vermieden werden kann, insbesondere durch Ausbildung eines Abwickelspaltes.

Bevorzugt ist eine erfindungsgemäße Anschlusseinheit, wobei sich die Aufwickelerhebung im Verwahrungsabschnitt in axialer Richtung um 0,5 bis 5 %, bevorzugt um 1 bis 4 %, besonders bevorzugt um 1,5 bis 3 %, verjüngt, bezogen auf die maximale Breite der Aufwickelerhebung orthogonal zur axialen Richtung, und/oder wobei die Außenkontur der Aufwickelerhebung im Verwahrungsabschnitt mit der axialen Richtung einen Winkel im Bereich von 1 bis 7°, bevorzugt im Bereich von 1,5 bis 5°, besonders bevorzugt im Bereich von 2 bis 4°, ganz besonders bevorzugt im Bereich von 2,5 bis 3,5°, einschließt. Hierdurch kann in einem Herstellungsprozess der erfindungsgemäßen Anschlusseinheit vorteilhafterweise im Verwahrungsabschnitt ein besonders leichtes Aufwickeln des Führungsrohres erreicht werden. Die im Querschnitt in axialer Richtung leicht angefaste Form der Aufwickelerhebung bedingt überdies, dass die Wicklungen in axialer Richtung effizient auf Stoß gelegt werden können und nicht übereinander, insbesondere nicht kreuz und quer übereinander. Das Überlappen der Wicklungen des Führungsrohres ist im vorliegenden Fall nicht gewollt, da hierdurch das Einführen des Lichtwellenleiters in das Führungsrohr, also das Einblasen der Glasfaser erheblich erschwert werden kann und die beschädigungsfreie Abwicklung weniger leicht möglich ist. Zudem begünstigt die leichte Anfasung das spätere Abwickeln zumindest geringfügig. Vorteilhafterweise ist die Kontur der Aufwickelerhebung im Verwahrungsabschnitt dabei jedoch derart gewählt, dass die Wicklungen des Führungsrohres in axialer Richtung nebeneinander abgelegt werden können, ohne dass das Anfasen der Außenkontur der Aufwickelerhebung im Verwahrungsabschnitt derart ausgeprägt wäre, dass sich die Wicklungen selbstständig lösen, das heißt abwickeln.

Um die Wicklungen im Inneren noch weiter zu befördern schlagen die Erfinder vor, die erfindungsgemäße Anschlusseinheit so auszulegen, dass die Wicklungen des Führungsrohres zwischen der Aufwickelerhebung und der dem Verwahrungsabschnitt gegenüberliegenden, umlaufenden Randflächen des Grundkörpers liegen, wobei zumindest ein Teil der Wicklungen des Führungsrohres die Randflächen des Grundkörpers kontaktiert. Hierdurch stabilisieren die Randflächen des Grundkörpers die um die Aufwickelerhebung gewickelten Wicklungen gegen ein ungewolltes Abwickeln zu den Seiten. In bevorzugten Ausgestaltungen können die umlaufenden Randflächen dabei analog zu den vorstehenden Ausführungen zur Aufwickelerhebung angefast werden.

Im Gegensatz zum Verwahrungsabschnitt soll der Abführabschnitt der Aufwickelerhebung das Abwickeln der Wicklungen des Führungsrohres erleichtern. Bevorzugt ist dafür eine erfindungsgemäße Anschlusseinheit, wobei sich die Aufwickelerhebung im Abführabschnitt in axialer Richtung um 50 % oder mehr, bevorzugt 70 % oder mehr, besonders bevorzugt 80 % oder mehr, verjüngt, bezogen auf die maximale Breite der Aufwickelerhebung orthogonal zur axialen Richtung, und/oder wobei die Außenkontur der Aufwickelerhebung im Abführabschnitt mit der axialen Richtung einen Winkel im Bereich von 45 bis 89°, bevorzugt im Bereich von 60 bis 85°, besonders bevorzugt im Bereich von 70 bis 80°, einschließt, und/oder wobei die Außenkontur der Aufwickelerhebung im Abführabschnitt in axialer Richtung kegelförmig ausgeführt ist. Vorteilhafterweise wird durch die sich verjüngende bzw. die kegelförmige Außenkontur der Aufwickelerhebung im Abführabschnitt ein einfaches Abwickeln der Wicklungen befördert. Insbesondere bei einem Zusammenwirken mit einer trichterförmigen Außenkontur des Grundkörpers in dem in axialer Richtung von der Aufwickelerhebung beabstandeten Bereich unter Ausbildung eines Abwickelspalts wird nach Einschätzung der Erfinder ein Abwickeln derart ermöglicht, dass sukzessive jeweils lediglich eine Wicklung des Führungsrohres zwischen den genannten Bereichen Platz findet. Hierdurch kann ein Verhaken oder Steckenbleiben des Führungsrohres im Grundkörper vorteilhafterweise vermieden werden.

Bevorzugt ist eine erfindungsgemäße Anschlusseinheit, wobei die Einführungsöffnung und die Ausgabeöffnung den gleichen Durchmesser aufweisen. Bevorzugt ist zusätzlich oder alternativ eine erfindungsgemäße Anschlusseinheit, wobei die Ausgabeöffnung kreisförmig oder oval, bevorzugt kreisförmig ausgeführt ist, und/oder wobei die Ausgabeöffnung einen Durchmesser im Bereich von 3 bis 15 mm, bevorzugt im Bereich von 5 bis 12 mm, aufweist. Bevorzugt ist zusätzlich oder alternativ eine erfindungsgemäße Anschlusseinheit, wobei die Einführungsöffnung kreisförmig oder oval, bevorzugt kreisförmig ausgeführt ist, und/oder wobei die Einführungsöffnung einen Durchmesser im Bereich von 3 bis 15 mm, bevorzugt im Bereich von 5 bis 12 mm, aufweist. Eine entsprechende Dimensionierung der Einführungsöffnung und/oder der Ausgabeöffnung ermöglicht ein einfaches Hindurchführen von für Lichtwellenleiter geeigneten Führungsrohren unterschiedlicher Durchmesser.

Bevorzugt ist eine erfindungsgemäße Anschlusseinheit, wobei die Einführungsöffnung und die Ausgabeöffnung an unterschiedlichen Gehäuseelementen den mehrteiligen Gehäuses angeordnet sind, wobei die Einführungsöffnung bevorzugt am Aufnahmeelement und die Ausgabeöffnung am Deckelelement angeordnet sind. Bevorzugt ist zusätzlich oder alternativ eine erfindungsgemäße Anschlusseinheit, wobei die Ausgabeöffnung und die zentrale Aufwickelerhebung an gegenüberliegenden Seiten des Grundkörpers angeordnet sind. Hierdurch wird nach Einschätzung der Erfinder das Führen des Führungsrohres im Grundkörper erleichtert.

Das von der erfindungsgemäßen Anschlusseinheit umfasste Führungsrohr ist für die Aufnahme zumindest eines Lichtwellenleiters geeignet und bestimmt. Der Fachmann versteht, dass es sich entsprechend um ein Hohlrohr handelt, wobei im Bereich des Glasfaser-Ausbaus insbesondere Mikrorohre und Minirohre Verwendung finden. Entsprechende Führungsrohre sind in den meisten Fällen zur Vermeidung von Beschädigungen und zum einfacheren Transport flexibel ausgestaltet. Bevorzugt ist also eine erfindungsgemäße Anschlusseinheit, wobei das Führungsrohr ein flexibles Leerrohr ist, bevorzugt ein Mikrorohr oder ein Minirohr, besonders bevorzugt ein Mikrorohr, und/oder wobei das Führungsrohr dazu eingerichtet ist, dass ein Lichtwellenleiter, bevorzugt eine Glasfaser, im Führungsrohr geführt werden kann. Bei dem Führungsrohr wird es sich dabei in den meisten Fällen um ein wasserdichtes Führungsrohr handeln, um den innenliegenden Lichtwellenleiter vor Feuchtigkeit zu schützen. Bevorzugt ist daher auch zusätzlich oder alternativ eine erfindungsgemäße Anschlusseinheit, wobei der erste Endabschnitt und/oder der zweite Endabschnitt, bevorzugt der erste Endabschnitt und der zweite Endabschnitt, mit einem Dichtungselement verschlossen sind, bevorzugt wasserdicht. Entsprechende Dichtungselemente können bspw. als Stopfen oder Schutzkappen ausgeführt sein.

Bevorzugt ist eine erfindungsgemäße Anschlusseinheit, wobei das Führungsrohr eine Länge im Bereich von 5 bis 50 m, bevorzugt im Bereich von 10 bis 30 m, besonders bevorzugt im Bereich von 15 bis 25 m, aufweist, und/oder wobei das Führungsrohr eine Länge von 5 m oder mehr, bevorzugt 10 m oder mehr, besonders bevorzugt 15 m oder mehr, aufweist. Vorteilhafterweise können hierdurch auch große Distanzen zwischen einem bereits verlegten Glasfasernetz auf öffentlichem Grund mit einer hiermit verbundenen erfindungsgemäßen Anschlusseinheit und einer nachträglich anzuschließenden Anschlussstelle überbrückt werden.

Wie vorstehend erläutert, ist das Führungsrohr mit zwei oder mehr Wicklungen um die sich in axialer Richtung erstreckende Aufwickelerhebung herum in der erfindungsgemäßen Anschlusseinheit angeordnet. Bevorzugt handelt es sich wegen der Anordnung "auf Stoß" somit um eine erfindungsgemäße Anschlusseinheit, wobei das Führungsrohr derart um die Aufwickelerhebung herumgewickelt ist, dass die Wicklungen jeweils im Wesentlichen in einer orthogonal zur axialen Richtung liegenden Wickelebene liegen. Bevorzugt ist dabei eine erfindungsgemäße Anschlusseinheit, wobei das Führungsrohr in drei oder mehr, bevorzugt vier oder mehr, insbesondere bevorzugt in einer Vielzahl von Wicklungen, um die Aufwickelerhebung herum angeordnet ist.

Die Erfinder haben erkannt, dass sich im Rahmen des Herstellungsprozesses der erfindungsgemäßen Anschlusseinheit das Führungsrohr besonders einfach in den Grundkörper einführen lässt, wenn die Einführungsöffnung tangential zu den Wicklungen des Führungsrohres ausgerichtet ist. Das bedeutet in anderen Worten, dass die Einführungsöffnung in besonders vorteilhaften Ausführungsformen in der Wickelebene, d. h. orthogonal zur axialen Richtung, von der Aufwickelerhebung beabstandet angeordnet ist. Bevorzugt ist also eine erfindungsgemäße Anschlusseinheit, wobei der in die Einführungsöffnung des Grundkörpers hineinragende zweite Endabschnitt des Führungsrohres tangential zu den Wicklungen des Führungsrohres verläuft, und/oder wobei die Einführungsöffnung derart am Grundkörper angeordnet ist, dass der hereinragende zweite Endabschnitt des Führungsrohres in einer Wickelebene orthogonal zur axialen Richtung tangential zu der in der Wickelebene liegenden Wicklung des Führungsrohres verläuft. Bevorzugt ist zusätzlich oder alternativ eine erfindungsgemäße Anschlusseinheit, wobei die Einführungsöffnung in einer orthogonal zur axialen Richtung verlaufenden Richtung von der Aufwickelerhebung beabstandet am Grundkörper angeordnet ist. Durch eine tangentiale Einführung des Führungsrohres kann der Herstellungsprozess der erfindungsgemäßen Anschlusseinheit daher besonders zeit- und kosteneffizient erfolgen.

Es kann als wichtiger Vorteil der vorliegenden Erfindung angesehen werden, dass die erfindungsgemäße Anschlusseinheit, insbesondere die Auslegung des Grundkörpers der erfindungsgemäßen Anschlusseinheit, ein verhakungsfreies Abwickeln der Wicklungen des Führungsrohres von der Aufwickelerhebung ermöglicht. Nach Einschätzung der Erfinder lässt sich dies unter anderem auch dadurch befördern, dass das aus dem Grundkörper herausgeführte Führungsrohr möglichst senkrecht zu den Wicklungen des Führungsrohres um die Aufwickelerhebung ausgerichtet ist. Bevorzugt ist entsprechend eine erfindungsgemäße Anschlusseinheit, wobei der aus der Ausgabeöffnung des Grundkörpers herausragende erste Endabschnitt des Führungsrohres im Wesentlichen in die axiale Richtung zeigt, sodass der erste Endabschnitt des Führungsrohres im Wesentlichen orthogonal auf den Wicklungen des Führungsrohres steht, und/oder wobei die Ausgabeöffnung derart am Grundkörper angeordnet ist, dass der erste Endabschnitt des Führungsrohres in die axiale Richtung zeigt.

Der Fachmann versteht, dass die erfindungsgemäße Anschlusseinheit zumindest zwei voneinander separate Komponenten umfasst, nämlich den Grundkörper und das Führungsrohr. Die erfindungsgemäße Anschlusseinheit kann dabei mit einem leeren, einblasbereiten Führungsrohr aber auch bereits mit einem im Führungsrohr angeordneten Lichtwellenleiter bereitgestellt werden. Bevorzugt ist dabei eine erfindungsgemäße Anschlusseinheit, wobei die Anschlusseinheit umfasst:
iii) einen im Führungsrohr angeordneten Lichtwellenleiter, bevorzugt eine Glasfaser.

Abhängig davon, ob das Führungsrohr schon einen Lichtleiter umfasst, unterscheidet sich der Anschluss an das verlegte Glasfasernetz. Bevorzugt ist hierfür eine erfindungsgemäße Anschlusseinheit, wobei die Anschlusseinheit am zweiten Endabschnitt ein Verbindungselement umfasst, wobei das Verbindungselement dazu eingerichtet ist, dass der zweite Endabschnitt des Führungsrohres über das Verbindungselement mit einem weiteren Führungsrohr, insbesondere einem weiteren Führungsrohr des Glasfasernetzes, verbunden werden kann, wobei das Verbindungselement bevorzugt eine Doppelsteckmuffe ist.

Wie vorstehend erläutert, ist die erfindungsgemäße Anschlusseinheit dafür vorgesehen, im Einsatz im Boden vergraben zu werden, wobei der erste Endabschnitt des Führungsrohres aus dem Grundkörper der erfindungsgemäßen Anschlusseinheit herausragt. Durch das Vergraben kann ein Auffinden des ersten Endabschnitts des Führungsrohres im Boden, beispielsweise bei einem nachträglichen Anschluss der der Anschlusseinheit zugeordneten Anschlussstelle, erschwert sein, wenn nicht beispielsweise eine physische Markierung angebracht werden soll. Bevorzugt ist daher eine erfindungsgemäße Anschlusseinheit, wobei die Anschlusseinheit einen sensordetektierbaren Sensormarker umfasst, wobei die Anschlusseinheit dazu ausgelegt ist, dass der sensordetektierbaren Sensormarker mit einer elektronischen Sensoreinheit detektiert werden kann, um die Position des sensordetektierbaren Sensormarkers im Erdreich zu detektieren. Bevorzugt ist insoweit eine erfindungsgemäße Anschlusseinheit, wobei der sensordetektierbaren Sensormarker am ersten Endabschnitt angeordnet ist, bevorzugt an einem Dichtungselement, das den ersten Endabschnitt verschließt. Bevorzugt ist zusätzlich oder alternativ eine erfindungsgemäße Anschlusseinheit, wobei der sensordetektierbaren Sensormarker ausgewählt ist aus der Gruppe bestehend aus magnetischen Sensormarkern. Vorteilhafterweise lässt sich hierdurch der erste Endabschnitt des Führungsrohres auch nach dem Vergraben der erfindungsgemäßen Anschlusseinheit im Boden besonders einfach auffinden, bspw. bei einem Magneten über Strahlungssensoren. Nach Einschätzung der Erfinder ist hierdurch das Verlegen des Führungsrohres der Anschlusseinheit zur anzuschließenden Anschlussstelle besonders zeiteffizient möglich.

Die erfindungsgemäße Anschlusseinheit ist dafür vorgesehen, im Rahmen einer Baumaßnahme eines Glasfasernetzes vor noch nicht angeschlossenen, potenziellen Anschlussstelle im Boden vergraben zu werden. Durch Ausüben einer Zugkraft auf den ersten Endabschnitt des Führungsrohres ist es bei dem nachträglichen Anschluss einer solchen potenziellen Anschlussstelle möglich, das Führungsrohr unter Abwicklung der Wicklungen aus dem Grundkörper der erfindungsgemäßen Anschlusseinheit herauszuziehen und dadurch die benötigte Länge zu generieren. Nach Einschätzung der Erfinder ist für die Verlegepraxis vorteilhaft, wenn die hierfür erforderliche Zugkraft so ausgelegt wird, dass diese von einem normalen Erwachsenen ausgeübt werden kann, sodass insbesondere keine externen Vorrichtungen zum Herausziehen des Führungsrohres notwendig sind. Hierdurch kann vorteilhafterweise Bedarf an komplizierter und ggf. kostenintensiver Technik reduziert werden. Bevorzugt ist also eine erfindungsgemäße Anschlusseinheit, wobei die Anschlusseinheit so ausgelegt ist, dass die in axialer Richtung wirkende Zugkraft, in deren Folge das Führungsrohr unter Abwicklung der Wicklungen aus dem Grundkörper herausgezogen werden kann, von einem durchschnittlichen Erwachsenen ohne Zuhilfenahme maschineller Vorrichtungen aufgebracht werden kann. Bevorzugt ist zusätzlich oder alternativ eine erfindungsgemäße Anschlusseinheit, wobei die Anschlusseinheit so ausgelegt ist, dass die in axialer Richtung wirkende Zugkraft, in deren Folge das Führungsrohr unter Abwicklung der Wicklungen aus dem Grundkörper herausgezogen werden kann, im Bereich von 1 bis 500 N, bevorzugt im Bereich von 2 bis 300 N, besonders bevorzugt im Bereich von 5 bis 100 N, ist. Bevorzugt ist zusätzlich oder alternativ eine erfindungsgemäße Anschlusseinheit, wobei die Anschlusseinheit so ausgelegt ist, dass die in axialer Richtung wirkende Zugkraft, in deren Folge das Führungsrohr unter Abwicklung der Wicklungen aus dem Grundkörper herausgezogen werden kann, 50 N oder weniger, bevorzugt 30 N oder weniger, besonders bevorzugt 10 N oder weniger, beträgt. Dem Fachmann ist klar, dass die erforderliche Zugkraft bei einer vergrabenen erfindungsgemäßen Anschlusseinheit auch immer von weiteren Faktoren abhängen wird, beispielsweise der Gesamtlänge des Führungsrohres im Grundkörper und insbesondere auch dem im Einsatz bei einem nachträglichen Anschluss einer Anschlussstelle tatsächlich ausgegrabenen Teil der erfindungsgemäßen Anschlusseinheit. Wenn beispielsweise lediglich das Ende des ersten Endabschnittes beim nachträglichen Anschluss der Anschlussstelle ausgegraben wird, müssen zusätzlich die Reibungskräfte zwischen dem nicht ausgegrabenen Teil des Führungsrohres und dem das Führungsrohr umgebenden Boden berücksichtigt werden.

Zum vereinfachten Herausziehen des Führungsrohres aus dem Grundkörper schlagen die Erfinder diesbezüglich vor, ein Schutzrohr an der Ausgabeöffnung vorzusehen, um eventuell auftretende Reibungskräfte zwischen Führungsrohr und dem umliegenden Boden beim Ausübend er Zugkraft zu vermindern bzw. zu vermeiden. Bevorzugt ist demgemäß eine erfindungsgemäße Anschlusseinheit, wobei die Anschlusseinheit umfasst:
iv) ein sich in axialer Richtung von der Ausgabeöffnung weg erstreckendes Schutzrohr, bevorzugt ein Wellrohr, für die zumindest abschnittsweise Aufnahme des ersten Endabschnittes des Führungsrohres, wobei das Schutzrohr bevorzugt mit der Ausgabeöffnung verbunden ist.

Bevorzugt ist eine erfindungsgemäße Anschlusseinheit, wobei die Einführungsöffnung dazu eingerichtet ist, den zweiten Endabschnitt zu fixieren, sodass der zweite Endabschnitt in Folge einer am ersten Endabschnitt angreifenden und in axialer Richtung wirkenden Zugkraft von 10 N, bevorzugt von 20 N, besonders bevorzugt 50 N, ganz besonders bevorzugt mit 100 N, nicht aus der Einführungsöffnung gezogen werden kann. Hierdurch kann erreicht werden, dass das Führungsrohr nach Abwicklung sämtlicher Wicklungen von der Aufwickelerhebung nicht weiter aus der Einführungsöffnung herausgezogen werden kann, sodass die Gefahr von Beschädigungen an einem im Führungsrohr geführten Lichtwellenleiter vermieden werden kann. Die Ausübung einer starken Zugkraft auf Lichtwellenleiter kann nämlich zum Brechen oder Zerreißen des Lichtwellenleiters führen.

Mit Blick auf die vorstehenden Ausführungen versteht der Fachmann, dass die Erfindung zudem ein Verfahren zum Verlegen eines Glasfasernetzes unter Einsatz einer erfindungsgemäßen Anschlusseinheit betrifft, umfassend die Verfahrensschritte:
A) Verlegen eines Glasfasernetzes im Erdreich, wobei das Verlegen zumindest teilweise auf öffentlichem Grund erfolgt,
B) Einbringen der Anschlusseinheit in das Erdreich im Bereich des öffentlichen Grundes, wobei der zweite Endabschnitt des Führungsrohres mit dem Glasfasernetz verbunden ist oder verbunden wird,
C) Anordnen des ersten Endabschnitts in einer Nachanschlussposition, sodass der erste Endabschnitt im Erdreich eines Privatgrundstücks liegt oder im Erdreich unmittelbar an ein Privatgrundstück angrenzt, und
D) Vergraben der Anschlusseinheit im Erdreich.

Bevorzugt ist insoweit ein erfindungsgemäßes Verfahren, wobei die Verfahrensschritte B) und C) für eine Vielzahl von nachträglich anzuschließenden Anschlussstellen durchgeführt werden, so dass jeder möglichen nachträglich anzuschließenden Anschlussstelle eine Anschlusseinheit zugeordnet ist. Hierdurch kann vorteilhafterweise jede potenzielle Anschlussstelle, insbesondere jedes "home passed", ohne großen Aufwand nachträglich an das Glasfasernetz angeschlossen werden, ohne dass öffentlicher Grund erneut aufgerissen werden muss.

Nach Einschätzung der Erfinder kommen die Vorteile der vorliegenden Erfindung besonders zum Tragen, wenn die im erfindungsgemäßen Verfahren eingesetzte Anschlusseinheit bereits selbst einen im Führungsrohr geführten Lichtwellenleiter umfasst oder wenn im Verfahrensschritt B) auch das Einblasen eines oder mehrerer Lichtwellenleiter in das Führungsrohr der erfindungsgemäßen Anschlusseinheit erfolgt. Bevorzugt ist daher ein erfindungsgemäßes Verfahren, wobei Verfahrensschritt B) das Einführen eines Lichtwellenleiters in das Führungsrohr umfasst. Hierdurch kann ein umständliches nachträgliches Einblasen eines Lichtwellenleiters in die Anschlusseinheit sowie ggf. insbesondere auch ein nachträgliches Spleißen an der Verbindungsstelle zwischen dem zweiten Endabschnitt und dem Glasfasernetz vorteilhafterweise vermieden werden, sodass ein nachgelagertes Verfahren zum nachträglichen Anschluss der Anschlussstelle an ein Glasfasernetz besonders zeiteffizient und durch die Verringerung noch notwendiger Arbeitsschritte insbesondere auch kosteneffizient erfolgen kann.

Bevorzugt ist zusätzlich oder alternativ ein erfindungsgemäßes Verfahren, wobei in Verfahrensschritt B) das Verbinden des zweiten Endabschnitts mit dem Glasfasernetz mittels eines Verbindungselementes der Anschlusseinheit erfolgt. Bevorzugt ist zusätzlich oder alternativ ein erfindungsgemäßes Verfahren, wobei in Verfahrensschritt B) das Verbinden des zweiten Endabschnitts mit dem Glasfasernetz das Spleißen eines im Führungsrohr geführten Lichtwellenleiters umfasst. In besonders vorteilhaften Ausführungsformen ist das Verbindungselement als Doppelsteckmuffe ausgeführt, welche das Spleißen eines in der erfindungsgemäßen Anschlusseinheit geführten Lichtwellenleiters besonders einfach ermöglicht.

Die Erfindung betrifft hierauf aufbauend überdies ein Verfahren zum nachträglichen Anschluss einer nachträglich anzuschließenden Anschlussstelle an ein Glasfasernetz, umfassend die Verfahrensschritte des erfindungsgemäßen Verfahrens zum Verlegen eines Glasfasernetzes, sowie die Verfahrensschritte:
W) Ausgraben des in der Nachanschlussposition angeordneten ersten Endabschnittes,
X) Ausüben einer Zugkraft auf den ersten Endabschnitt des Führungsrohres, so dass das Führungsohr unter Abwicklung der Wicklungen aus dem Grundkörper herausgezogen wird, wobei das Führungsrohr bis zu der nachträglich anzuschließenden Anschlussstelle geführt wird, und
Y) Verbinden des Glasfasernetzes mit der nachträglich anzuschließenden Anschlussstelle mit einem durch das Führungsrohr geführten Lichtwellenleiter.

Bevorzugt ist ein erfindungsgemäßes Verfahren, wobei das Verfahren vor Verfahrensschritt W) zusätzlich den Verfahrensschritt V) umfasst:
V) Detektieren der Position der im Erdreich vergrabenen Anschlusseinheit. Bevorzugt ist insoweit ein erfindungsgemäßes Verfahren, wobei das Detektieren mittels einer elektronischen Detektionseinheit unter Detektion eines von der Anschlusseinheit umfassten sensordetektierbaren Sensormarkers erfolgt.

Bevorzugt ist zusätzlich oder alternativ ein erfindungsgemäßes Verfahren, wobei die nachträglich anzuschließende Anschlussstelle eine Gebäudeanschlussstelle ist.

Bevorzugt ist zusätzlich oder alternativ ein erfindungsgemäßes Verfahren, wobei in Verfahrensschritt Y) das Verbinden des Glasfasernetzes mit der nachträglich anzuschließenden Anschlussstelle das Spleißen eines im Führungsrohr geführten Lichtwellenleiters an einen Lichtwellenleiter der nachträglich anzuschließenden Anschlussstelle umfasst.

Offenbart wird zudem eine Verwendung einer erfindungsgemäßen Anschlusseinheit bei der Verlegung eines Glasfasernetzes zur Erleichterung des nachträglichen Anschlusses einer nachträglich anzuschließenden Anschlussstelle an das Glasfasernetz unter Vermeidung von Grabungsarbeiten auf öffentlichem Grund.

Nachfolgend werden die Erfindung und bevorzugte Ausführungsformen der Erfindung unter Bezugnahme auf die beiliegenden Figuren näher erläutert und beschrieben. Dabei zeigen:
- Fig. 1: eine schematische Darstellung einer erfindungsgemäßen Anschlusseinheit in einer bevorzugten Ausführungsform;
- Fig. 2: eine schematische Darstellung des Grundkörpers der Anschlusseinheit der Fig. 1 in einer ersten perspektivischen Ansicht;
- Fig. 3: eine schematische Darstellung des Grundkörpers der Anschlusseinheit der Fig. 1 in einer zweiten perspektivischen Ansicht;
- Fig. 4: eine schematische Darstellung des Grundkörpers der Anschlusseinheit der Fig. 1 in einer Querschnittsdarstellung;
- Fig. 5: eine schematische Darstellung eines Gehäuseelementes des Grundkörpers mit umwickeltem Führungsrohr der Anschlusseinheit der Fig. 1;
- Fig. 6: eine schematische Darstellung des Gehäuseelementes der Fig. 5 in einer ersten perspektivischen Ansicht;
- Fig. 7: eine schematische Darstellung des Gehäuseelementes der Fig. 5 in einer zweiten perspektivischen Ansicht; und
- Fig. 8: eine schematische Darstellung einer im Rahmen eines erfindungsgemäßen Verfahrens im Boden vergrabenen erfindungsgemäßen Anschlusseinheit in einer Visualisierung des erfindungsgemäßen Verfahrens.

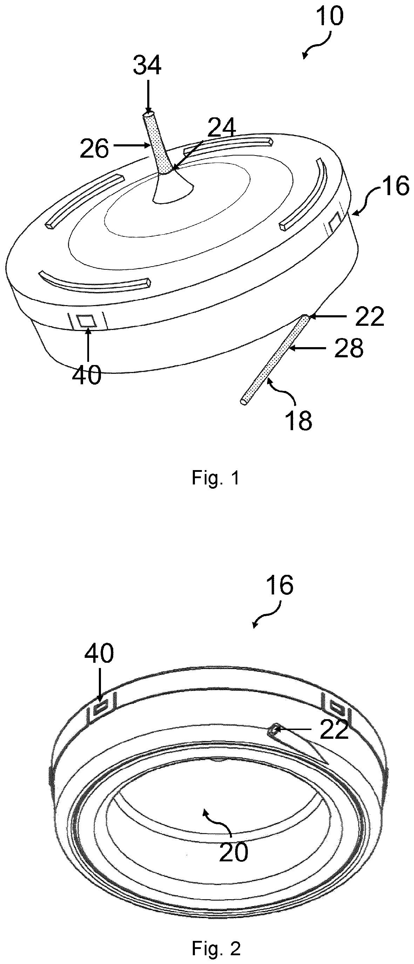

Fig. 1 zeigt eine schematische Darstellung einer erfindungsgemäßen Anschlusseinheit 10 für Lichtwellenleiter zur Verwendung beim nachträglichen Anschluss einer Anschlussstelle 12 an ein Glasfasernetz 14 in einer bevorzugten Ausführungsform.

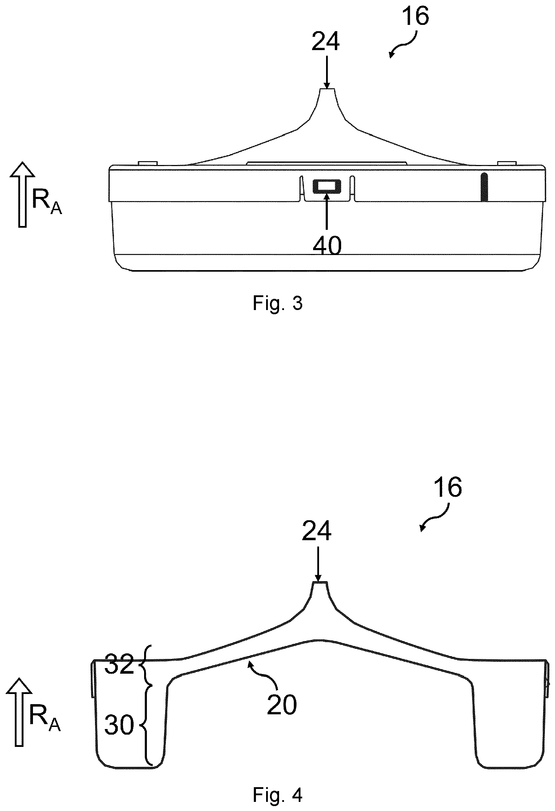

Die Anschlusseinheit 10 umfasst einen Grundkörper 16 und ein im Aufnahmeinnenraum des Grundkörpers 16 angeordnetes Führungsrohr 18. Das Führungsrohr 18 ist als flexibles Mikrorohr ausgeführt, in welches eine Glasfaser umfassend einen oder mehrere Lichtwellenleiter eingeblasen werden kann. Zur Einführung des Führungsrohrs 18 ist orthogonal zur axialen Richtung R_{A} (vgl. hierzu auch Fig. 3) von der Aufwickelerhebung 20 beabstandet eine kreisförmige Einführungsöffnung 22 am Grundkörper 16 angeordnet. Zur Ausgabe des Führungsrohres 18 ist in axialer Richtung R_{A} von der der Aufwickelerhebung 20 beabstandet eine kreisförmige Ausgabeöffnung 24 angeordnet.

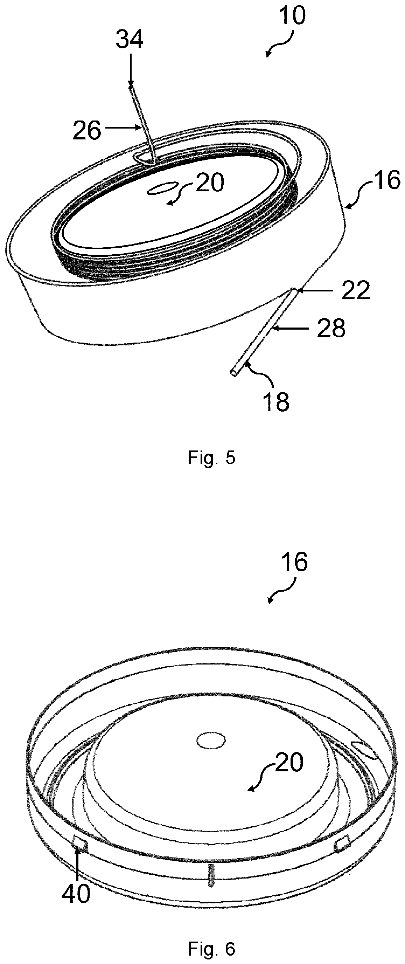

In axialer Richtung R_{A} weist der gezeigte Grundkörper 16 im gezeigten Beispiel eine Höhe von 120 mm und orthogonal zur axialen Richtung R_{A} eine Breite von 340 mm auf. Der Grundkörper 16 ist, wie in der Seitenansicht in Fig. 3 gezeigt, zweiteilig ausgeführt und umfasst ein Aufnahmeelement und ein Deckelelement, welche über einen Klickverschluss 40 reversibel und zerstörungsfrei lösbar miteinander verbunden sind und beide aus spritzgegossenem HDPE bestehen. Im Bereich des Deckelelementes verjüngt sich der Grundkörper 16 trichterartig derart, dass die Ausgabeöffnung 24 am Ende der Verjüngung am Deckelelement angeordnet ist. Das Aufnahmeelement des Grundkörpers 16 ist zylinderartig ausgeführt und umfasst, wie aus der perspektivischen Ansicht der Fig. 2 und Fig. 6 ersichtlich, eine sich in axialer Richtung R_{A} in den Aufnahmeinnenraum hinein erstreckende Aufwickelerhebung 20, dessen Außenkontur in der orthogonal zur axialen Richtung R_{A} stehenden Ebene mit der Außenkontur des Grundkörpers 16 korreliert.

Die geometrische Form des Grundkörpers 16 und insbesondere auch der Aufwickelerhebung 20 im Querschnitt ist in Fig. 4 gezeigt. In axialer Richtung R_{A} umfasst die Aufwickelerhebung 20 aneinander angrenzend einen Verwahrungsabschnitt 30 sowie einen Abführabschnitt 32, in dem die Aufwickelerhebung 20 unterschiedlich stark angefast ist. Im Verwahrungsabschnitt 30 ist die Aufwickelerhebung 20 in axialer Richtung R_{A} leicht angefast, sodass sie im gezeigten Beispiel mit der axialen Richtung R_{A} einen Winkel von etwa 3° einschließt. Im Abführabschnitt 32 verjüngt sie sich in axialer Richtung R_{A} korrespondierend zur Außenkontur des Grundkörpers 16 oberhalb der Abwickelerhebung 20 kegelförmig, wobei zwischen dem Grundkörper 16 und der Abwickelerhebung 20 ein Abwickelspalt ausgebildet wird.

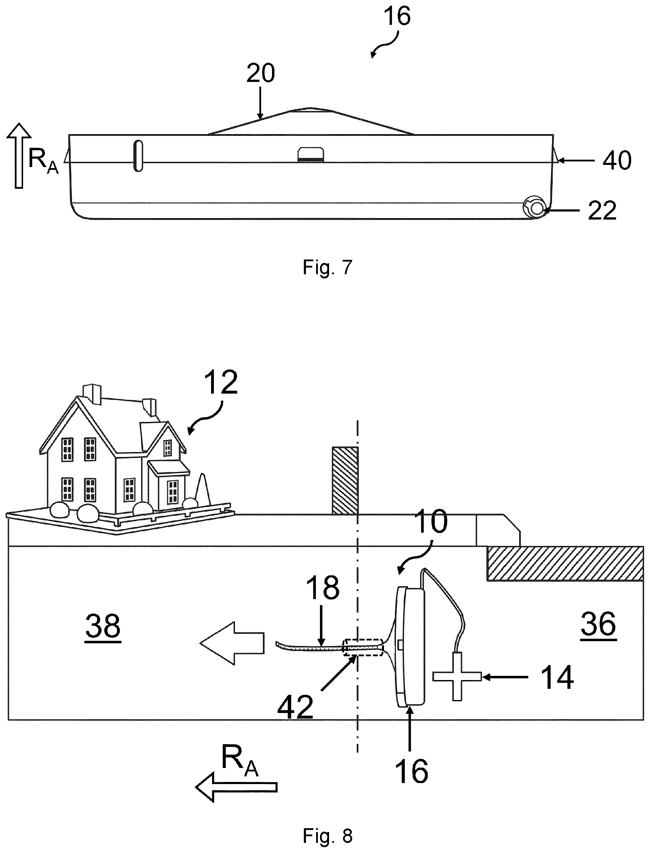

Das Führungsrohr 18 verläuft so im Grundkörper 16, dass das eine Ende des Führungsrohrs 18 -vorliegend als zweiter Endabschnitt 28 bezeichnet- in die Einführungsöffnung 22 hineinragt und im gezeigten Beispiel in einer Vielzahl von Wicklungen des Führungsrohres 18 mündet, die, wie in Fig. 5 gezeigt, um die Aufwickelerhebung 20 herum gewickelt sind. Die Positionierung der Einführungsöffnung 22 ermöglicht dabei eine in Relation zu den Wicklungen tangentiale Einführung des Führungsrohres 18 in den Grundkörper 16, wie aus der Seitenansicht des Aufnahmeelementes des Grundkörpers 16 der Fig. 7 ersichtlich.

Die Wicklungen des Führungsrohres 18 liegen aufgrund der geometrischen Form der Aufwickelerhebung 20 im Verwahrungsabschnitt 30 so, dass sie jeweils im Wesentlichen in einer orthogonal zur axialen Richtung R_{A} liegenden Wickelebene liegen.

Die Wicklungen münden abschließend im anderen Ende des Führungsrohres 18, vorliegend als erster Endabschnitt 26 bezeichnet, der in axialer Richtung R_{A} aus der Ausgabeöffnung 24 herauszeigt. Zum wasserdichten Verschluss ist das Führungsrohr 18 beidseitig mit Schutzkappen verschlossen, sodass eine innenliegende Glasfaser nicht durch Feuchtigkeit ium beeinträchtigt werden kann. Die Schutzkappe am ersten Endabschnitt 26 umfasst einen als Magneten ausgeführten sensordetektierbaren Sensormarker 34.

In besonders bevorzugten Ausführungsformen umfasst die Anschlusseinheit 10 überdies ein mit der Ausgabeöffnung 24 verbundenes und sich in axialer Richtung R_{A} von der Ausgabeöffnung 24 weg erstreckendes Schutzrohr zum Schutz des ersten Endabschnittes 26 (nicht gezeigt) sowie ein als Doppelsteckmuffe ausgeführtes Verbindungselement am zweiten Endabschnitt 28 zum Verbinden des Führungsrohres 18 mit einem Glasfasernetz 14 (nicht gezeigt).

In Fig. 8 ist die erfindungsgemäße Anschlusseinheit 10 nach der Durchführung eines erfindungsgemäßen Verfahrens zum Verlegen eines Glasfasernetzes 14 gezeigt, wie es am Ausgang eines erfindungsgemäßen Verfahrens zum nachträglichen Anschluss einer nachträglich anzuschließenden Anschlussstelle 12 an ein Glasfasernetz 14 vorliegen kann. Im gezeigten Beispiel wurde noch in der Bauphase des Glasfasernetzes 14 eine Glasfaser in das Führungsrohr 18 der Anschlusseinheit 10 eingeblasen und die Anschlusseinheit 10 in das Erdreich auf öffentlichem Grund 36 angrenzend an ein Privatgrundstück 38 mit einer Anschlussstelle 12 eingebracht. Der zweite Endabschnitt 28 wurde hierbei mittels einer Doppelsteckmuffe mit dem Glasfasernetz 14 verbunden. Der erste Endabschnitt 26 des Führungsrohres 18 wurde in eine Nachanschlussposition gebracht, sodass der erste Endabschnitt 26 im Erdreich eines Privatgrundstücks 38 liegt. Abschließend wurde die Anschlusseinheit 10 derart vergraben, dass sie nicht mehr von oberhalb des Erdreichs zugänglich ist. Zum vereinfachten des späteren Herausziehen des Führungsrohres 18 aus dem Grundkörper 16 ist in der Fig. 8 zudem ein Schutzrohr 42 an der Ausgabeöffnung 24 angeordnet, welches als Wellrohr ausgeführt ist und sich bis auf den Privatgrund erstreckt, so dass der erste Endabschnitt 26 auf dem Privatgrund freigelegt und herausgezogen werden kann, ohne dass das Herausziehen im Bereich des öffentlichen Grundes durch zu viel Erdreich erschwert wird, wobei das Schutzrohr 42 theoretisch auch weiter auf den Privatgrund gezogen werden könnte.

In einem nachgelagerten erfindungsgemäßen Verfahren zum nachträglichen Anschluss der gezeigten Anschlussstelle 12 an das Glasfasernetz 14 kann mittels einer elektronischen Detektionseinheit die Position des von der Anschlusseinheit 10 umfassten, sensordetektierbare Sensormarker 34 am ersten Endabschnitt 26 detektiert werden und infolgedessen der erste Endabschnitt 26 ausgegraben werden.

In Folge des händischen Ausübens einer Zugkraft auf den ersten Endabschnitt 26 des Führungsrohres 18 in axialer Richtung R_{A}, wird das Führungsohr 18 unter Abwicklung der Wicklungen aus dem Grundkörper 16 herausgezogen und bis zu der nachträglich anzuschließenden Anschlussstelle 12 geführt. Durch das Verbinden des im Führungsrohr 18 geführten Lichtwellenleiters an einen Lichtwellenleiter der Anschlussstelle 12 kann die Anschlussstelle 12 ohne kostenintensive Baumaßnahmen auf öffentlichem Grund 36 und ohne die hierfür häufig erforderlichen Genehmigungen sowie ohne die Notwendigkeit eines Einblastrupps effizient und schnell erfolgen.

### Bezugszeichen

- 10: Anschlusseinheit
- 12: Anschlussstelle
- 14: Glasfasernetz
- 16: Grundkörper
- 18: Führungsrohr
- 20: Aufwickelerhebung
- 22: Einführungsöffnung
- 24: Ausgabeöffnung
- 26: erster Endabschnitt
- 28: zweiter Endabschnitt
- 30: Verwahrungsabschnitt
- 32: Abführabschnitt
- 34: Sensormarker
- 36: öffentlicher Grund
- 38: Privatgrundstück
- 40: Schnellverschluss
- 42: Schutzrohr

- R_{A}: axiale Richtung

## Patentansprüche

1. Anschlusseinheit (10) für Lichtwellenleiter zur Verwendung beim nachträglichen Anschluss einer Anschlussstelle (12) an ein Glasfasernetz (14), umfassend
i) einen Grundkörper (16) mit einem Aufnahmeinnenraum zur Aufnahme einer Vielzahl von Wicklungen eines Führungsrohres (18), wobei der Aufnahmeinnenraum eine sich in einer axialen Richtung in den Aufnahmeinnenraum hinein erstreckende zentrale Aufwickelerhebung (20) aufweist,
wobei der Aufnahmeinnenraum über eine Einführungsöffnung (22) und eine von der Einführungsöffnung (22) verschiedene Ausgabeöffnung (24) des Grundkörpers (16) zugänglich ist, wobei die Ausgabeöffnung (24) in axialer Richtung (R_{A}) von der zentralen Aufwickelerhebung (20) beabstandet ist, und
ii) ein in zwei oder mehr Wicklungen um die Aufwickelerhebung (20) herum aufgewickeltes Führungsrohr (18) mit einem ersten Endabschnitt (26) und einem zweiten Endabschnitt (28),
wobei der erste Endabschnitt (26) des Führungsrohres (18) in axialer Richtung (R_{A}) aus der Ausgabeöffnung (24) des Grundkörpers (16) herausragt, wobei der zweite Endabschnitt (28) des Führungsrohres (18) in die Einführungsöffnung (22) des Grundkörpers (16) hineinragt,
wobei die Anschlusseinheit (10) dazu eingerichtet ist, dass das Führungsohr (18) in Folge einer am ersten Endabschnitt (26) angreifenden und in axialer Richtung (R_{A}) wirkenden Zugkraft unter Abwicklung der Wicklungen aus dem Grundkörper (16) herausgezogen werden kann.

2. Anschlusseinheit (10) nach Anspruch 1, wobei die Anschlusseinheit (10) umfasst:
iii) einen im Führungsrohr (18) angeordneten Lichtwellenleiter, bevorzugt eine Glasfaser.

3. Anschlusseinheit (10) nach einem der Ansprüche 1 oder 2, wobei sich der Grundkörper (16) in axialer Richtung oberhalb der Aufwickelerhebung (20) verjüngt, wobei die Ausgabeöffnung (24) am Ende der Verjüngung angeordnet ist

4. Anschlusseinheit (10) nach einem der Ansprüche 1 bis 3, wobei die Aufwickelerhebung (20) in axialer Richtung (R_{A}) aneinander angrenzend einen Verwahrungsabschnitt (30) und einen von ihm verschiedenen Abführabschnitt (32) umfasst, wobei die Außenkontur der Aufwickelerhebung (20) im Verwahrungsabschnitt (30) mit der axialen Richtung (R_{A}) einen Winkel im Bereich von 1 bis 7°einschließt, und/oder wobei die Außenkontur der Aufwickelerhebung (20) im Abführabschnitt (32) mit der axialen Richtung (R_{A}) einen Winkel im Bereich von 45 bis 89° einschließt.

5. Anschlusseinheit (10) nach einem der Ansprüche 1 bis 4, wobei die Einführungsöffnung (22) derart am Grundkörper (16) angeordnet ist, dass der hereinragende zweite Endabschnitt (28) des Führungsrohres (18) in einer Wickelebene orthogonal zur axialen Richtung (R_{A}) tangential zu der in der Wickelebene liegenden Wicklung des Führungsrohres (18) verläuft.

6. Anschlusseinheit (10) nach einem der Ansprüche 1 bis 5, wobei die Einführungsöffnung (22) dazu eingerichtet ist, den zweiten Endabschnitt (28) zu fixieren, sodass der zweite Endabschnitt (28) in Folge einer am ersten Endabschnitt (26) angreifenden und in axialer Richtung (R_{A}) wirkenden Zugkraft von 5 N oder nicht aus der Einführungsöffnung (22) gezogen werden kann.

7. Anschlusseinheit (10) nach einem der Ansprüche 1 bis 6, wobei die Ausgabeöffnung (24) derart am Grundkörper (16) angeordnet ist, dass der erste Endabschnitt (26) des Führungsrohres (18) in die axiale Richtung zeigt.

8. Anschlusseinheit (10) nach einem der Ansprüche 1 bis 7, wobei die Anschlusseinheit (10) einen sensordetektierbaren Sensormarker (34) umfasst, wobei die Anschlusseinheit (10) dazu ausgelegt ist, dass der sensordetektierbaren Sensormarker (34) mit einer elektronischen Sensoreinheit detektiert werden kann, um die Position des sensordetektierbaren Sensormarkers (34) im Erdreich zu detektieren.

9. Verfahren zum Verlegen eines Glasfasernetzes unter Einsatz einer Anschlusseinheit (10) nach einem der Ansprüche 1 bis 8, umfassend die Verfahrensschritte:
A) Verlegen eines Glasfasernetzes (14) im Erdreich, wobei das Verlegen zumindest teilweise auf öffentlichem Grund (36) erfolgt,
B) Einbringen der Anschlusseinheit (10) in das Erdreich im Bereich des öffentlichen Grundes (36), wobei der zweite Endabschnitt (28) des Führungsrohres (18) mit dem Glasfasernetz (14) verbunden ist oder verbunden wird,
C) Anordnen des ersten Endabschnitts (26) in einer Nachanschlussposition, sodass der erste Endabschnitt (26) im Erdreich eines Privatgrundstücks (38) liegt oder im Erdreich unmittelbar an ein Privatgrundstück (38) angrenzt, und
D) Vergraben der Anschlusseinheit (10) im Erdreich.

10. Verfahren zum nachträglichen Anschluss einer nachträglich anzuschließenden Anschlussstelle (12) an ein Glasfasernetz (14), umfassend die Verfahrensschritte des Verfahrens zum Verlegen eines Glasfasernetzes (14) nach Anspruch 9, sowie die Verfahrensschritte:
W) Ausgraben des in der Nachanschlussposition angeordneten ersten Endabschnittes (26),
X) Ausüben einer Zugkraft auf den ersten Endabschnitt (26) des Führungsrohres (18), so dass das Führungsohr (18) unter Abwicklung der Wicklungen aus dem Grundkörper (16) herausgezogen wird, wobei das Führungsrohr (18) bis zu der nachträglich anzuschließenden Anschlussstelle (12) geführt wird, und
Y) Verbinden des Glasfasernetzes (14) mit der nachträglich anzuschließenden Anschlussstelle (12) mit einem durch das Führungsrohr (18) geführten Lichtwellenleiter.
